# EUROPEAN PATENT SPECIFICATION

(11) **EP 2 066 178 B1**
(45) Date of publication and mention of the grant of the patent: **17.07.2013**
(21) Application number: 07726063.6
(22) Date of filing: 18.06.2007
(51) Int. Cl.: A01N 43/36, A01N 43/653, A01N 43/54, A01N 53/00, A01P 3/00

(54) **PESTICIDAL COMBINATIONS COMPRISING TEBUCONAZOLE , AZOXYSTROBIN AND FLUDIOXONIL**
PESTIZIDE ZUSAMMENSETZUNGEN, DIE TEBUCONAZOL, AZOXYSTROBIN UND FLUDIOXONIL UMFASSEN
COMBINAISON PESTICIDE COMPRENANT TEBUCONAZOL, AZOXYSTROBIN ET FLUDIOXONIL

(30) Priority: 20.06.2006 EP 06012603
(43) Date of publication of application: 10.06.2009
(73) Proprietor: Syngenta Participations AG, 4058 Basel (CH); Syngenta Limited, Guildford Surrey GU2 7YH (GB)
(72) Inventor: NOWAKOWSKI, Sylvain, 4058 Basel (CH); HALL, Beth, Cambridge CB2 4QT (GB); SZTOR, Edmond, 78210 St Cyr L'Ecole (FR); TYSHKEVICH, Valery, 22000 Minsk (BY); PYUSHPEKI, Victor, 115054 Moscow (RU); BALLOD, Olga, 4058 Basel (CH)
(74) Representative: Arunasalam, Velautha-Cumaran
(86) International application number: PCT/EP2007/005358
(87) International publication number: WO 2007/147548

(56) References cited:
- WO-A-97/22254
- WO-A-2006/128655
- WO-A-2007/009775
- WO-A2-2006/024333
- WO-A2-2006/035316
- SARTORATO.A. ET AL.: "Chemical Control of angular leaf spot of common bean" SUMMA PHYTOPATHOLOGICA, vol. 29, no. 2, April 2003 (2003-04), pages 202-204, XP001248812
- KATARIA H.R. ET AL.: "Efficacy of Pseudomonas fluorescens strains and some modern fungicides for control of Rhizoctonia solani AG-4 in bean and cucumber" ZEITSCHRIFT FUER PFLANZENKRANKHEITEN UND PFLANZENSCHUTZ - JOURNAL OF PLANT DISEASES AND PROTECTION, vol. 109, no. 4, 2002, pages 384-400, XP001248550 Stuttgart

## Description

The present invention relates to the use of a defined combination of pesticidal active ingredients, and compositions thereof, and methods for using such combinations in the control or prevention of pathogenic and/or pest damage.

Certain combinations of active ingredients for controlling pathogens and pests are described in the literature. WO 2006/035316 discloses the combination of azoxystrobin, fludioxonil and difenoconazole for seed treatments. A. Sartorato and AC. Rava disclose a combination of tebuconazole, azoxystrobin with or without imidacloprid for seed treatments (Summa Phytopathologia, Vol. 29, 2003, p.202-204). The biological properties of those known combinations are not entirely satisfactory in the areas of pathogenic control, phytotoxicity, and environmental and worker exposure, for example. In particular, in the instance a pathogen has become, or risks becoming resistant to the previously known combinations, improved methods of control or prevention are sought.

The protection of plant propagation materials (especially seeds) with active ingredients are target applications which partially address the need for a reduction of environmental and worker exposure when used alone or in conjunction with foliar or in-furrow active ingredient applications.

It is known that Tebuconazole shows biological activity against phytopathogenic fungi, e.g. known from EP-0-040-345 where its properties and methods of preparation are described. On the other hand various fungicidal compounds of different chemical classes are widely known as plant fungicides for application in various crops of cultivated plants. However, crop tolerance and activity against phytopathogenic plant fungi do not always satisfy the needs of agricultural practice in many incidents and aspects.

There is a continuing need to provide pesticidal combinations, which provide improved, for example, biological properties, for example, synergistic properties, especially for controlling pathogens and/or pests

That need is solved according to the invention by the provision of the present pesticidal combinations. Accordingly, in a first aspect, the present invention provides a pesticidal combination comprising, preferably consisting essentially of, (I) tebuconazole, (II) azoxystrobin and (III) fludioxonil, and optionally (IV) one or more customary formulation auxiliaries, provided that where tefluthrin and thiamethoxam are both present, then the combination comprises more than five active ingredients.

The combination demonstrates improved activity compared to activity of compounds alone.

In a second aspect, the present invention provides a method of controlling or preventing pathogenic damage or pest damage in a plant propagation material, a plant, parts of a plant and/or plant organs that grow at a later point in time, which comprises applying simultaneously on the plant, part of the plant, plant organs, plant propagation material or a surrounding thereof, the combination as defined in the first aspect.

In a third aspect, the present invention provides a method of protecting a plant propagation material, a plant, parts of a plant and/or plant organs that grow at a later point in time against pathogenic damage or pest damage by applying simultaneously to the plant, parts of plant, plant organs, plant propagation material or a surrounding thereof the combination, as defined in the first aspect.

The invention also relates to a plant propagation material treated with a combination defined in the first aspect.

Further, in an embodiment the present invention relates to a method which comprises (i) treating a plant propagation material, such as a seed, with a pesticidal combination as defined in the first aspect, and (ii) planting or sowing the treated propagation material, wherein the combination protects against pathogenic damage or pest damage of the treated plant propagation material, parts of plant plant organs and/or plant grown from the treated propagation material.

Also, in an embodiment the present invention relates to a method which comprises (i) treating a plant propagation material, such as a seed, with a pesticidal combination as defined in the first aspect, and (ii) planting or sowing the treated propagation material, and (iii) achieving protection against pathogenic damage or pest damage of the treated plant propagation material, parts of plant, plant organs and/or plant grown from the treated propagation material. In a preferred embodiment of any aspects of the invention, each combination is a composition comprising, preferably consisting essentially of, (I), (II) and (III), and optionally (IV) one or more customary formulation auxiliaries.

Controlling, preventing or protecting and its inflections, within the context of the present invention, mean reducing any undesired effect, such as
- pathogenic, such as phytopathogenic, especially fungi, infestation or attack of, and
- pathogenic damage or pest damage on,
a plant, part of the plant or plant propagation material to such a level that an improvement is demonstrated.

Each of pesticidal combinations according to the invention has very advantageous properties for protecting plants against (i) pathogenic, such as phytopathogenic, especially fungi, attack or infestation, which result in disease and damage to the plant and/or (ii) pest attack or damage; particularly in the instance of plants, the present invention can control or prevent pathogenic damage and/or pest damage on a seed, parts of plant, plant organs and/or plant grown from the treated seed. In some cases, control against pest attack or damage also indirectly results in control against pathogenic attack, and vice-a-versa.

These properties are for example the synergistically enhanced actions of combinations of the compounds (e.g. (I), (II) and (III)), resulting in lower pathogenic damage and/or pest damage, lower rates of application, or a longer duration of action. In the instance of agriculture, the enhanced actions are found to show an improvement in the growing characteristics of a plant by, for example, higher than expected control of the pathogenic infestation and/or pest damage.

The improvement in the growing (or growth) characteristics of a plant can manifest in a number of different ways, but ultimately it results in a better product of the plant. It can, for example, manifest in improving the yield and/or vigour of the plant or quality of the harvested product from the plant, which improvement may not be connected to the control of diseases and/or pests.

As used herein the phrase "improving the yield" of a plant relates to an increase in the yield of a product of the plant by a measurable amount over the yield of the same product of the plant produced under the same conditions, but without the application of the subject method. It is preferred that the yield be increased by at least about 0.5%, more preferred that the increase be at least about 1%, even more preferred is about 2%, and yet more preferred is about 4%, or more. Yield can be expressed in terms of an amount by weight or volume of a product of the plant on some basis. The basis can be expressed in terms of time, growing area, weight of plants produced, amount of a raw material used, or the like.

As used herein the phrase "improving the vigour" of a plant relates to an increase or improvement of the vigour rating, or the stand (the number of plants per unit of area), or the plant height, or the plant canopy, or the visual appearance (such as greener leaf colour), or the root rating, or emergence, or protein content, or increased tillering, or bigger leaf blade, or less dead basal leaves, or stronger tillers, or less fertilizer needed, or less seeds needed, or more productive tillers, or earlier flowering, or early grain maturity, or less plant verse (lodging), or increased shoot growth, or earlier germination, or any combination of these factors, or any other advantages familiar to a person skilled in the art, by a measurable or noticeable amount over the same factor of the plant produced under the same conditions, but without the application of the subject method.

When it is said that the present method is capable of "improving the yield and/or vigour" of a plant, the present method results in an increase in either the yield, as described above, or the vigor of the plant, as described above, or both the yield and the vigor of the plant.

Accordingly, the present invention also provides a method of improving the growing characterictics of a plant, which comprises applying simultaneously to the plant, parts of plant, and/or plant propagation material, the combination, as defined in the first aspect.

In an embodiment, in the instance the combination comprises thiamethoxam and tefluthrin, the combination comprises more than five active ingredients, i.e. tebuconazole, azoxystrobin, thiamethoxam, tefluthrin, and Fludioxonil.

In an embodiment, the combination comprises, as active ingredients only, (a) tebuconazole, azoxystrobin and fludioxonil, or (b) tebuconazole, azoxystrobin, thiamethoxam and fludioxonil.

Each of the combinations of the invention can be used in the agricultural sector and related fields of use for controlling or preventing disease infestation and/or pest damage on plants.

Each of the combinations according to the present invention comprises a fungicide and so is effective against phytopathogenic fungi, especially occurring in plants, including seedborne fungi and belong to the following classes. Examples of fungi include Ascomycetes (e.g. Penicillium, Gaeumannomyces graminis); Basidiomycetes (e.g. the genus Hemileia, Rhizoctonia, Puccinia), Fungi imperfecti (e. g. Botrytis, Helminthosporium, Rhynchosporium, Fusarium, Septoria, Cercospora, Alternaria, Pyricularia and Pseudocercosporella herpotrichoides); Oomycetes (e. g. Phytophthora, Peronospora, Bremia, Pythium, Plasmopara); Zygomycetes (e.g., Rhizopus spp.). A combination is especially effective against Alternaria spp., Aspergillus spp., Ascochyta spp., Botrytis cinerea, Cercospora spp., Claviceps purpurea, Cochliobolus spp. (such as Cochliobolus sativus), Colletotrichum spp., Diplodia maydis, Epicoccum spp., Erysiphe graminis, Fusarium spp. (such as Fusarium culmorum, Fusarium subglutinans, Fusarium oxysporium, Fusarium solani, Fusarium graminearum, Fusarium proliferatum, and Fusarium moniliforme), Gaeumannomyces graminis, Giberella fujikuroi, Giberella zeae, Helminthosporium graminearum, Microdochium nivale, Monographella nivalis, Penicillium spp., Puccinia spp., Pyrenophora spp. (such as Pyrenophora graminea), Peronosclerospora spp., Peronspora spp., Phakopsora pachyrhizi, Phythium spp., Phoma spp., Phomopsis spp., Rhizoctonia solani, Rhizoctonia cerealis, Septoria spp., Pseudocercosporella spp., Sclerotinia spp., Sphacelotheca reilliana, Tilletia spp., Rhizopus spp., Typhula spp., Ustilago spp., Urocystis occulta, Sphacelotheca spp. (e.g. Spacelotheca reilliani), Thielaviopsis basicola, Typhula incarnata, Thanatephorus cucumeris, and Verticillium spp.

In the event each combination of the invention also includes a pesticide other than fungicide (such as thiamethoxam, abamectin, imidacloprid, tefluthrin, lambda-cyhalothrin) then the pesticide spectrum of the combination is broadened to include pest control, such as control of pests selected from Nematoda, Insecta and Arachnida. In that instance, the combination can also be applied on the pest to control or prevent pest damage and protect the desired material (e.g. plant and parts of plant) from pest damage. Examples of pests include:
from the order Lepidoptera, for example, Acleris spp., Adoxophyes spp., Aegeria spp., Agrotis spp., Alabama argillaceae, Amylois spp., Anticarsia gemmatalis, Archips spp., Argyrotaenia spp., Autographa spp., Busseola fusca, Cadra cautella, Carposina nipponensis, Chilo spp., Choristoneura spp., Clysia ambiguella, Cnaphalocrocis spp., Cnephasia spp., Cochylis spp., Coleophora spp., Crocidolomia spp., Cryptophlebia leucotreta, Crysodeixis includens, Cydia spp., Diatraea spp., Diparopsis castanea, Earias spp., Elasmopalpus spp., Ephestia spp., Eucosma spp., Eupoecilia ambiguella, Euproctis spp., Euxoa spp., Grapholita spp., Hedya nubiferana, Heliothis spp., Hellula undalis, Hyphantria cunea, Keiferia lycopersicella, Leucoptera scitella, Lithocollethis spp., Lobesia botrana, Lymantria spp., Lyonetia spp., Malacosoma spp., Mamestra brassicae, Manduca sexta, Operophtera spp., Ostrinia nubilalis, Pammene spp., Pandemis spp., Panolis flammea, Pectinophora gossypiella, Phthorimaea operculella, Pieris rapae, Pieris spp., Plutella xylostella, Prays spp., Scirpophaga spp., Sesamia spp., Sparganothis spp., Spodoptera spp., Synanthedon spp., Thaumetopoea spp., Tortrix spp., Trichoplusia ni and Yponomeuta spp.;
from the order Coleoptera, for example, Agriotes spp., Anthonomus spp., Atomaria linearis, Ceutorhynchus spp., Chaetocnema tibialis, Cosmopolites spp., Curculio spp., Dermestes spp., Diabrotica spp., Epilachna spp., Eremnus spp., Gonocephalum spp., Heteronychus spp., Leptinotarsa decemlineata, Lissorhoptrus spp., Melolontha spp., Orycaephilus spp., Otiorhynchus spp., Phlyctinus spp., Phyllotreta spp., Popillia spp., Protostrophus spp., Psylliodes spp., Rhizopertha spp., Scarabeidae, Sitophilus spp., Sitotroga spp., Tenebrio spp., Tribolium spp. and Trogoderma spp.;
from the order Orthoptera, for example, Blatta spp., Blattella spp., Gryllotalpa spp., Leucophaea maderae, Locusta spp., Periplaneta spp. and Schistocerca spp.;
from the order Isoptera, for example, Reticulitermes spp.;
from the order Psocoptera, for example, Liposcelis spp.;
from the order Anoplura, for example, Haematopinus spp., Linognathus spp., Pediculus spp., Pemphigus spp. and Phylloxera spp.;
from the order Mallophaga, for example, Damalinea spp. and Trichodectes spp.;
from the order Thysanoptera, for example, Frankliniella spp., Hercinothrips spp., Taeniothrips spp., Thrips palmi, Thrips tabaci and Scirtothrips aurantii;
from the order Heteroptera, for example, Dichelops melacanthus, Distantiella theobroma, Dysdercus spp., Euchistus spp., Eurygaster spp., Leptocorisa spp., Nezara spp., Piesma spp., Rhodnius spp., Sahlbergella singularis, Scotinophara spp. and Triatoma spp.;
from the order Homoptera, for example, Aleurothrixus floccosus, Aleyrodes brassicae, Aonidiella spp., Aphididae, Aphis spp., Aspidiotus spp., Bemisia tabaci, Ceroplaster spp., Chrysomphalus aonidium, Chrysomphalus dictyospermi, Coccus hesperidum, Empoasca spp., Eriosoma larigerum, Erythroneura spp., Gascardia spp., Laodelphax spp., Lecanium corni, Lepidosaphes spp., Macrosiphus spp., Myzus spp., Nephotettix spp., Nilaparvata spp., Paratoria spp., Pemphigus spp., Planococcus spp., Pseudaulacaspis spp., Pseudococcus spp., Psylla spp., Pulvinaria aethiopica, Quadraspidiotus spp., Rhopalosiphum spp., Saissetia spp., Scaphoideus spp., Schizaphis spp., Sitobion spp., Trialeurodes vaporariorum, Trioza erytreae and Unaspis citri;
from the order Hymenoptera, for example, Acromyrmex, Athalia rosae, Atta spp., Cephus spp., Diprion spp., Diprionidae, Gilpinia polytoma, Hoplocampa spp., Lasius spp., Monomorium pharaonis, Neodiprion spp., Solenopsis spp. and Vespa spp.;
from the order Diptera, for example, Antherigona soccata, Bibio hortulanus, , Ceratitis spp., Chrysomyia spp., Culex spp., Cuterebra spp., Dacus spp., Delia spp., Drosophila melanogaster, , Liriomyza spp., , Melanagromyza spp., , Orseolia spp., Oscinella frit, Pegomyia hyoscyami, Phorbia spp., Rhagoletis pomonella, Sciara spp.,;
from the order Acarina, for example, Acarus siro, Aceria sheldoni, Aculus schlechtendali, Amblyomma spp., Argas spp., , Brevipalpus spp., Bryobia praetiosa, Calipitrimerus spp., Chorioptes spp., Dermanyssus gallinae, Eotetranychus carpini, Eriophyes spp., Hyalomma spp., Olygonychus pratensis, Ornithodoros spp., Panonychus spp., Phyllocoptruta oleivora, Polyphagotarsonemus latus, Psoroptes spp., Rhipicephalus spp., Rhizoglyphus spp., Sarcoptes spp., Tarsonemus spp. and Tetranychus spp.; and
from the class Nematoda, for example, the species of Meloidogyne spp. (for example, Meloidogyne incoginita and Meloidogyne javanica), Heterodera spp. (for example, Heterodera glycines, Heterodera schachtii, Heterodora avenae and Heterodora trifolii), Globodera spp. (for example, Globodera rostochiensis), Radopholus spp. (for example, Radopholus similes), Rotylenchulus spp., Pratylenchus spp. (for example, Pratylenchus neglectans and Pratylenchus penetrans), Aphelenchoides spp., Helicotylenchus spp., Hoplolaimus spp., Paratrichodorus spp., Longidorus spp., Nacobbus spp., Subanguina spp. Belonlaimus spp., Criconemella spp., Criconemoides spp. Ditylenchus spp., Dolichodorus spp., Hemicriconemoides spp., Hemicycliophora spp., Hirschmaniella spp., Hypsoperine spp., Macroposthonia spp., Melinius spp., Punctodera spp., Quinisulcius spp., Scutellonema spp., Xiphinema spp., and Tylenchorhynchus spp.

Each of the combinations of the invention can be formulated for a particular use. Preferably, each combination is formulated for protecting cultivated plants or their propagation materials. Accordingly, each combination of the invention can be applied to the plant in a conventional manner, such as foliar spray. Advantageously, the each of the combinations are formulated for plant propagation material, such as seed, treatment applications for controlling or preventing damage by pests and/or pathogens, which are found in agriculture and forestry, and can particularly damage the plant in the early stages of its development.

Further, the present invention also envisages soil application of the combinations of the invention to control the soil-dwelling pests and/or soil-borne pathogens. Methods of applying to the soil can be via any suitable method, which ensures that the combination penetrates the soil, for example, nursery tray application, in furrow application, soil drenching, soil injection, drip irrigation, application through sprinklers or central pivot, incorporation into soil (broad cast or in band) are such methods.

The benefits from the invention can also be achieved either by (i) treating plant propagation material with a combinaton or (ii) applying to the locus where control is desired, generally the planting site, the combination, or both (i) and (ii).

The term "plant propagation material" is understood to denote all the generative parts of the plant, such as seeds, which can be used for the multiplication of the latter and vegetative plant materials such as cuttings and tubers (for example, potatoes). Accordingly, as used herein, part of a plant includes propagation material. There may be mentioned, e.g., the seeds (in the strict sense), roots, fruits, tubers, bulbs, rhizomes, parts of plants. Germinated plants and young plants, which are to be transplanted after germination or after emergence from the soil, may also be mentioned. These young plants may be protected before transplantation by a total or partial treatment by immersion.

Parts of plant and plant organs that grow at later point in time are any sections of a plant that develop from a plant propagation material, such as a seed. Parts of plant, plant organs, and plants can also benefit from the pathogenic and/or pest damage protection achieved by the application of each combination on to the plant propagation material. In an embodiment, certain parts of a plant and certain plant organs that grow at later point in time can also be considered as plant propagation material, which can themselves be applied (or treated) with the combination; and consequently, the plant, further parts of the plant and further plant organs that develop from the treated parts of plant and treated plant organs can also benefit from the pathogenic and/or pest damage protection achieved by the application of each combinations on to the certain parts of plant and certain plant organs.

Methods for applying or treating pesticidal active ingredients and mixtures thereof on to plant propagation material, especially seeds, are known in the art, and include dressing, coating, pelleting and soaking application methods of the propagation material. In a preferred embodiment, the combination is applied or treated on to the plant propagation material by a method such that the germination is not induced; generally seed soaking induces germination because the moisture content of the resulting seed is too high. Accordingly, examples of suitable methods for applying (or treating) a plant propagation material, such as a seed, is seed dressing, seed coating or seed pelleting and alike.

It is preferred that the plant propagation material is a seed. Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed or during the sowing process (seed directed applications). The seed may also be primed either before or after the treatment.

Even distribution of the active ingredients and adherence thereof to the seeds is desired during propagation material treatment. Treatment could vary from a thin film (dressing) of the formulation containing the active ingredient(s) on a plant propagation material, such as a seed, where the original size and/or shape are recognizable to an intermediary state (such as a coating) and then to a thicker film (such as pelleting with many layers of different materials (such as carriers, for example, clays; different formulations, such as of other active ingredients; polymers; and colourants) where the original shape and/or size of the seed is no longer recognisable.

The seed treatment occurs to an unsown seed, and the term "unsown seed" is meant to include seed at any period between the harvest of the seed and the sowing of the seed in the ground for the purpose of germination and growth of the plant.

Treatment to an unsown seed is not meant to include those practices in which the active ingredient is applied to the soil but would include any application practice that would target the seed during the planting process.

Preferably, the treatment occurs before sowing of the seed so that the sown seed has been pre-treated with the combination. In particular, seed coating or seed pelleting are preferred in the treatment of the combinations according to the invention. As a result of the treatment, the active ingredients in each combination are adhered on to the seed and therefore available for pathogenic and/or pest control.

The treated seeds can be stored, handled, sowed and tilled in the same manner as any other active ingredient treated seed.

The combinations according to the present invention are suitable for plants of the crops: cereals (wheat, barley, rye, oats, corn, rice, sorghum, triticale and related crops); beet (sugar beet and fodder beet); leguminous plants (beans, lentils, peas, soybeans); oil plants (rape, mustard, sunflowers); cucumber plants (marrows, cucumbers, melons); fibre plants (cotton, flax, hemp, jute); vegetables (spinach, lettuce, asparagus, cabbages, carrots, onions, tomatoes, potatoes, paprika); as well as ornamentals (flowers, shrubs, broadleaved trees and evergreens, such as conifers). Especially suitable are wheat, barley, rye, oats, triticale, corn, and soybean.

Suitable target crops also include transgenic crop plants of the foregoing types. The transgenic crop plants used according to the invention are plants, or propagation material thereof, which are transformed by means of recombinant DNA technology in such a way that they are - for instance - capable of synthesizing selectively acting toxins as are known, for example, from toxin-producing invertebrates, especially of the phylum Arthropoda, as can be obtained from Bacillus thuringiensis strains; or as are known from plants, such as lectins; or in the alternative capable of expressing a herbicidal or fungicidal resistance. Examples of such toxins, or transgenic plants which are capable of synthesizing such toxins, have been disclosed, for example, in EP-A-0 374 753, WO 93/07278, WO 95/34656, EP-A-0 427 529 and EP-A-451 878 and are incorporated by reference in the present application.

The combinations according to the present invention are particularly well suited for combating pathogens in cereals, such as wheat, barley, rye or oats; maize; rice; soybean; turf; sugarbeet; oil seed rape; potatoes; pulse crops, such as peas, lentils or chickpea; and sunflower.

The combinations according to the present invention are particularly effective against rusts; powdery mildews; leafspot species; early blights; molds and post harvest dieseases; especially against Puccinia in cereals; Phakopsora in soybeans; Hemileia in coffee; Phragmidium in roses; Alternaria in potatoes, tomatoes and cucurbits; Sclerotinia in vegetables, sunflower and oil seed rape; black rot, red fire, powdery mildew, grey mold and dead arm disease in vine; Botrytis cinerea in fruits; Monilinia spp. in fruits and Penicillium spp. in fruits.

The combinations are especially useful for controlling plant diseases, such as:
Alternaria species in fruit and vegetables,
Ascochyta species in pulse crops,
Botrytis cinerea (gray mold) in strawberries, tomatoes, sunflower and grapes,
Cercospora arachidicola in groundnuts,
Cochliobolus sativus in cereals,
Colletotrichum species in pulse crops,
Erysiphe cichoracearum and Sphaerotheca fuliginea in cucurbits,
Fusarium graminearum in cereals and maize,
Gäumannomyces graminis in cereals and lawns,
Helminthosporium maydis in maize,
Helminthosporium oryzae in rice,
Helminthosporium solani on potatoes,
Hemileia vastatrix on coffee,
Microdochium nivale in wheat and rye,
Phakopsora pachyrhizi in soybean,
Puccinia species in cereals,
Phragmidium mucronatum in roses,
Pyrenophora graminea in barley,
Pyricularia oryzae in rice,
Rhizoctonia species in cotton, soybean, cereals, maize, potatoes, rice and lawns,
Sclerotinia homeocarpa in lawns,
Sphacelotheca reilliana in maize,
Tilletia species in cereals,
Typhula incarnata in barley,
Uncinula necator, Guignardia bidwellii and Phomopsis viticola in vines,
Urocystis occulta in rye,
Ustilago species in cereals and maize,
Monilinia fructicola on stone fruits,
Monilinia fructigena on fruits,
Monilinia laxa on stone fruits,
Penicillium digitatum on citrus,
Penicillium expansum on apples, and
Penicillium italicum on citrus.

The mass ratio between the active ingredient compounds is selected as to give the desired, for example synergistic, action. In general, the mass ratio would vary depending on the specific active ingredient and how many active ingredients are present in the combination. Generally, the mass ratio between any two active ingredients is from 100:1 to 1:100, preferably from 75:1 to 1:75, more preferably, 50:1 to 1.50, especially 25:1 to 1:25, advantageously 10:1 to 1:10, such as 5:1 to 1:5.

The rates of application (use) of the combination vary, for example, according to type of use, type of crop, the specific active ingredients in the combination, type of plant propagation material (if appropriate), but is such that the active ingredients in the combination is an effective amount to provide the desired enhanced action (such as disease or pest control) and can be determined by trials and routine experimentation known to one of ordinary skill in the art.

Generally for foliar or soil treatments, application rates can vary from 0.05 to 3 kg per hectare (g/ha) of active ingredients.

Generally for seed treatments, application rates can vary from 0.5 to 1000g / 100kg of seeds of active ingredients.

The application rates for (I) tebuconazole, (II) azoxystrobin and (III) fludioxonil tend to be 0.5 -10, preferably 1 - 5, more preferably 1 - 4, g/100kg of seeds of (I); 0.5 - 30, preferably 0.5 - 20, more preferably 1 -15, g/100kg of seeds of (II); and 0.5 - 20, preferably 1 -10, more preferably 2 - 7, g/100kg of seeds of (III).

The plant propagation material treated by each combination of the present invention can be, therefore, resistant to disease and/or pest damage; accordingly, the present invention also provides a pathogenic and/or pest resistant plant propagation material which is treated with each combination and consequently at least the active ingredients thereof are adhered on the propagation material, such as seed.

The seed treatment combinations and compositions can also comprise or may be applied together and/or sequentially with further active compounds. These further compounds can be other pesticidal active ingredients, fertilizers or micronutrient donors or other preparations that influence plant growth, such as inoculants.

A single pesticidal active ingredient may have activity in more than one area of pest control, for example, a pesticide may have fungicide, insecticide and nematicide activity. Specifically, aldicarb is known for insecticide, acaricide and nematicide activity, while metam is known for insecticide, herbicide, fungicide and nematicide activity, and thiabendazole and captan can provide nematicide and fungicide activity.

The combinations of the present invention may be mixed with other pesticides, such as additional fungicides, additional insecticides and nematicides.

Examples of other pesticides include triazole derivatives, strobilurins, carbamate (including thiocarbamate), benzimidazoles (thiabendazole), N-trihalomethylthio compounds (captan), substituted benzenes, carboxamides, phenylamides and phenylpyrroles, and mixtures thereof; and neonicotinoids, biological fermentation products (e.g. abamectin, emamectin), carbamates and pyrethroids.

The compounds of the combinations (e.g. (I), (II) and (III)), and any other pesticides, may be used either in pure form, i.e., as a solid active ingredient, for example, in a specific particle size, or preferably together with at least one of the auxiliary (also known as adjuvants) customary in formulation technology, such as extenders, e.g., solvents or solid carriers, or surface-active compounds (surfactants), in the form of a formulation, in the present invention. Generally, the compounds (I), (II) and (III) are in the form of a formulation composition with one or more of customary formulation auxiliaries.

Therefore, each combination of compounds (e.g. (I), (II) and (III)) are normally used in the form of formulations. The compounds can be applied simultaneously to the locus where control is desired, if desired together with further carriers, surfactants or other application-promoting adjuvants customarily employed in formulation technology.

In the event compounds of the combinations (e.g. (I), (II) and (III)) are applied simultaneously in the present invention, they may be applied as a composition containing the combination, in which case each of (I), (II) and (III) can be obtained from a separate formulation source and mixed together (known as a tank-mix, ready-to-apply, spray broth, or slurry), optionally with other pesticides, or (I), (II) and (III) can be obtained as single formulation mixture source (known as a pre-mix, concentrate, formulated compound (or product)), and optionally mixed together with other pesticides.

In an embodiment, each combination of the present invention is applied as a composition, preferably in a pre-mix formulation. Accordingly, the present invention includes a composition comprising, as active ingredients, (I), (II) and (III), and optionally other pesticides, and optionally one or more customary formulation auxiliaries; which may be in the form of a tank-mix or pre-mix composition.

In a preferred embodiment of the invention, the combination of tebuconazole, azoxystrobin and fludioxonol is provided in the form of a pre-mix composition (or mixture).

Alternative to the actual synergistic action with respect to pesticidal activity, the combinations according to the invention can also have surprising advantageous properties which can also be described, in a wider sense, as synergistic activity. Examples of such advantageous properties that may be mentioned are: advantageous behaviour during formulation and/or upon application, for example upon grinding, sieving, emulsifying, dissolving or dispensing; increased storage stability; improved stability to light; more advantageous degradability; improved toxicological and/or ecotoxicological behaviour; or any other advantages familiar to a person skilled in the art.

Examples of foliar formulation types for pre-mix compositions are:
GR: Granules
WP: wettable powders
WG: water dispersable granules (powders)
SG: water soluble granules
SL: soluble concentrates
EC: emulsifiable concentrate
EW: emulsions, oil in water
ME: micro-emulsion
SC: aqueous suspension concentrate
CS: aqueous capsule suspension
OD: oil-based suspension concentrate, and
SE: aqueous suspo-emulsion.

Whereas, examples of seed treatment formulation types for pre-mix compositions are:
WS: wettable powders for seed treatment slurry
LS: solution for seed treatment
ES: emulsions for seed treatment
FS: suspension concentrate for seed treatment
WG: water dispersible granules, and
CS: aqueous capsule suspension.

Examples of formulation types suitable for tank-mix compositions are solutions, dilute emulsions, suspensions, or a mixture thereof, and dusts.

As with the nature of the formulations, the methods of application, such as foliar, drench, spraying, atomizing, dusting, scattering, coating or pouring, are chosen in accordance with the intended objectives and the prevailing circumstances.

The tank-mix compositions are generally prepared by diluting with a solvent (for example, water) the one or more pre-mix compositions containing different pesticides, and optionally further auxiliaries.

Suitable carriers and adjuvants can be solid or liquid and are the substances ordinarily employed in formulation technology, e.g. natural or regenerated mineral substances, solvents, dispersants, wetting agents, tackifiers, thickeners, binders or fertilizers.

The formulations are prepared in known manner, e.g., by homogeneously mixing and/or grinding the active ingredients with extenders, e.g., solvents, solid carriers and, where appropriate, surface-active compounds (surfactants).

Suitable solvents are: aromatic hydrocarbons, preferably the fractions containing 8 to 12 carbon atoms, e.g. xylene mixtures or substituted naphthalenes, phthalates, such as dibutyl phthalate or dioctyl phthalate, aliphatic hydrocarbons, such as cyclohexane or paraffins, alcohols and glycols and their ethers and esters, such as ethanol, ethylene glycol, ethylene glycol monomethyl or monoethyl ether, ketones, such as cyclohexanone, strongly polar solvents, such as N-methyl-2-pyrrolidone, dimethyl sulfoxide or dimethylformamide, as well as vegetable oils or epoxidised vegetable oils, such as epoxidised coconut oil or soybean oil; or water.

The solid carriers used, e.g., for dusts and dispersible powders, are normally natural mineral fillers, such as calcite, talcum, kaolin, montmorillonite or attapulgite. In order to improve the physical properties it is also possible to add highly dispersed silicic acid or highly dispersed absorbent polymers. Suitable granulated adsorptive carriers are porous types, for example pumice, broken brick, sepiolite or bentonite, and suitable nonsorbent carriers are, for example, calcite or sand. In addition, a great number of pregranulated materials of inorganic or organic nature can be used, e.g., especially dolomite or pulverized plant residues.

Depending upon the nature of the active ingredient compounds to be formulated, suitable surface-active compounds are non-ionic, cationic and/or anionic surfactants having good emulsifying, dispersing and wetting properties. The term "surfactants" will also be understood as comprising mixtures of surfactants.

Particularly advantageous application-promoting adjuvants are also natural or synthetic phospholipids of the cephalin and lecithin series, e.g., phosphatidylethanolamine, phosphatidylserine, phosphatidylglycerol and lysolecithin.

Generally, a tank-mix formulation for foliar or soil application comprises 0.1 to 20%, especially 0.1 to 15 %, active ingredient compounds, and 99.9 to 80 %, especially 99.9 to 85 %, of a solid or liquid auxiliaries (including, for example, a solvent such as water), where the auxiliaries can be a surfactant in an amount of 0 to 20 %, especially 0.1 to 15 %, based on the tank-mix formulation.

Typically, a pre-mix formulation for foliar application comprises 0.1 to 99.9 %, especially 1 to 95 %, active ingredient compounds, and 99.9 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

Normally, a tank-mix formulation for seed treatment application comprises 0.25 to 80%, especially 1 to 75 %, active ingredient compounds, and 99.75 to 20 %, especially 99 to 25 %, of a solid or liquid auxiliaries (including, for example, a solvent such as water), where the auxiliaries can be a surfactant in an amount of 0 to 40 %, especially 0.5 to 30 %, based on the tank-mix formulation.

Typically, a pre-mix formulation for seed treatment application comprises 0.5 to 99.9 %, especially 1 to 95 %, active ingredient compounds, and 99.5 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

Whereas commercial products will preferably be formulated as concentrates (e.g., pre-mix composition (formulation)), the end user will normally employ dilute formulations (e.g., tank mix composition).

Preferred seed treatment pre-mix formulations are aqueous suspension concentrates. The formulation can be applied to the seeds using conventional treating techniques and machines, such as fluidized bed techniques, the roller mill method, rotostatic seed treaters, and drum coaters. Other methods, such as spouted beds may also be useful. The seeds may be presized before coating. After coating, the seeds are typically dried and then transferred to a sizing machine for sizing. Such procedures are known in the art.

In general, the pre-mix compositions of the invention contain 0.5 to 99.9 especially 1 to 95, advantageously 1 to 50 , %, by mass of active ingredient compounds, and 99.5 to 0.1, especially 99 to 5, %, by mass of a solid or liquid adjuvant (including, for example, a solvent such as water), where the auxiliaries (or adjuvant) can be a surfactant in an amount of 0 to 50, especially 0.5 to 40, %, by mass based on the mass of the pre-mix formulation.

A preferred embodiment is a plant propagation material treating (or protecting) composition, wherein said plant propagation material protecting composition comprises additionally a colouring agent. The plant propagation material protecting composition or mixture may also comprise at least one polymer from water-soluble and water-dispersible film-forming polymers that improve the adherence of the active ingredients to the treated plant propagation material, which polymer generally has an average molecular weight of at least 10,000 to about 100,000.

The Examples which follow serve to illustrate the invention.

### Formulation Examples

| Wettable powders | a) | b) | c) |
|---|---|---|---|
| active ingredients | 25 % | 50 % | 75 % |
| sodium lignosulfonate | 5 % | 5 % | - |
| sodium lauryl sulfate | 3 % | | 5 % |
| sodium diisobutylnaphthalenesulfonate | - | 6 % | 10 % |
| phenol polyethylene glycol ether (7-8 mol of ethylene oxide) | - | 2 % | - |
| highly dispersed silicic acid | 5 % | 10 % | 10 % |
| Kaolin | 62 % | 27 % | - |

The active ingredient is thoroughly mixed with the adjuvants and the mixture is thoroughly ground in a suitable mill, affording wettable powders that can be diluted with water to give suspensions of the desired concentration.

| Powders for dry seed treatment | a) | b) | c) |
|---|---|---|---|
| active ingredients | 25 % | 50 % | 75 % |
| light mineral oil | 5 % | 5 % | 5 % |
| highly dispersed silicic acid | 5 % | 5 % | - |
| Kaolin | 65 % | 40 % | - |
| Talcum | 20 | | |

The active ingredient is thoroughly mixed with the adjuvants and the mixture is thoroughly ground in a suitable mill, affording powders that can be used directly for seed treatment.

### Emulsifiable concentrate

| | |
|---|---|
| active ingredients | 10 % |
| octylphenol polyethylene glycol ether (4-5 mol of ethylene oxide) | 3 % |
| calcium dodecylbenzenesulfonate | 3 % |
| castor oil polyglycol ether (35 mol of ethylene oxide) | 4 % |
| Cyclohexanone | 30 % |
| xylene mixture | 50 % |

Emulsions of any required dilution, which can be used in plant protection, can be obtained from this concentrate by dilution with water.

| Dusts | a) | b) | c) |
|---|---|---|---|
| Active ingredients | 5 % | 6 % | 4 % |
| Talcum | 95 % | - | - |
| Kaolin | - | 94 % | - |
| mineral filler | - | - | 96 % |

Ready-for-use dusts are obtained by mixing the active ingredient with the carrier and grinding the mixture in a suitable mill. Such powders can also be used for dry dressings for seed.

### Extruder granules

| | |
|---|---|
| Active ingredients | 15 % |
| sodium lignosulfonate | 2 % |
| carboxymethylcellulose | 1 % |
| Kaolin | 82 % |

The active ingredient is mixed and ground with the adjuvants, and the mixture is moistened with water. The mixture is extruded and then dried in a stream of air.

### Coated granules

| | |
|---|---|
| Active ingredients | 8 % |
| polyethylene glycol (mol. wt. 200) | 3 % |
| Kaolin | 89 % |

The finely ground active ingredient is uniformly applied, in a mixer, to the kaolin moistened with polyethylene glycol. Non-dusty coated granules are obtained in this manner.

### Suspension concentrate

| | |
|---|---|
| active ingredients | 40 % |
| propylene glycol | 10 % |
| nonylphenol polyethylene glycol ether (15 mol of ethylene oxide) | 6 % |
| Sodium lignosulfonate | 10 % |
| carboxymethylcellulose | 1 % |
| silicone oil (in the form of a 75 % emulsion in water) | 1 % |
| Water | 32 % |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

### Flowable concentrate for seed treatment

| | |
|---|---|
| active ingredients | 40 % |
| propylene glycol | 5 % |
| copolymer butanol PO/EO | 2 % |
| Tristyrenephenole with 10-20 moles EO | 2 % |
| 1,2-benzisothiazolin-3-one (in the form of a 20% solution in water) | 0.5 % |
| monoazo-pigment calcium salt | 5 % |
| Silicone oil (in the form of a 75 % emulsion in water) | 0.2 % |
| Water | 45.3 % |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

### Slow Release Capsule Suspension

28 parts of the combination, or of each of these compounds from (I), (II) and (III) separately, are mixed with 2 parts of an aromatic solvent and 7 parts of toluene diisocyanate/polymethylene-polyphenylisocyanate-mixture (8:1). This mixture is emulsified in a mixture of 1.2 parts of polyvinylalcohol, 0.05 parts of a defoamer and 51.6 parts of water until the desired particle size is achieved. To this emulsion a mixture of 2.8 parts 1,6-diaminohexane in 5.3 parts of water is added. The mixture is agitated until the polymerization reaction is completed. The obtained capsule suspension is stabilized by adding 0.25 parts of a thickener and 3 parts of a dispersing agent. The capsule suspension formulation contains 28% of the active ingredients. The medium capsule diameter is 8-15 microns. The resulting formulation is applied to seeds as an aqueous suspension in an apparatus suitable for that purpose.

Using such formulations, either straight or diluted, plant propagation material can be treated and protected against damage, for example, from pathogen(s) and/or pest(s), by, for example, spraying, pouring or immersing.

The active ingredient combinations according to the invention are distinguished by the fact that they are especially well tolerated by plants and are environmentally friendly.

In an embodiment, the combinations according to the invention can also be used to treat stored products, such as grain, for protection against pathogens and/or pests.

Each active ingredient combination according to the invention is especially advantageous for the treatment of plant propagation material.

In a preferred embodiment, each of the combinations of the present invention is a plant propagation material, preferably seed, treating composition.

In each aspect and embodiment of the invention, "consisting essentially" and inflections thereof are a preferred embodiment of "comprising" and its inflections, and "consisting of" and inflections thereof are a preferred embodiment of "consisting essentially of" and its inflections.

Use of a term in a singular form also encompasses that term in plural form and vice a versa.

The compounds (I), (II) and (III) defined in the first aspect are active ingredients for use in the agrochemical industry (also known as pesticides). A description of their structure as well as the structures of other pesticides (e.g., fungicides, insecticides, nematicides) can be found in the e-Pesticide Manual, version 3.1, 13th Edition, Ed. CDC Tomlin, British Crop Protection Council, 2004-05.

### Biological Examples

### Example 1:

**Fusarium - Greenhouse - count of infected plants**

| **Trial** | **Plot size** | **Crop/variety** | **DAP** |
|---|---|---|---|
| 1 | 0.02m² | Winter wheat/ Ilias | 54 |
| 2 | 0.02m² | Winter wheat/ Ilias | 49 |
| 3 | 0.02m² | Winter wheat/ Ilias | 22 |
| 4 | 0.02m² | Summer barley/ Arcardia | 49 |
| 5 | 0.02m² | Summer barley/ Arcardia | 23 |

| **Trial** | **1** | **2** | **3** | **4** | **5** | **average** |
|---|---|---|---|---|---|---|
| Check | 24.5 (a) | 30.3 (a) | 32.8 (a) | 33.8 (a) | 26.3 (a) | 31.5 |
| Tefluthrin, Azoxystrobin, Fludioxonil and Tebuconazole @ 5+2+5+3 gai/ 100kg of seed | 0.3 (b) | 0 (b) | 0.3 (b) | 0 (b) | 0 (b) | 0.1 |

### Example 2:

**Ustilago - % pest incidence**

| **Trial** | **Plot size** | **Crop/variety** | **DAP** |
|---|---|---|---|
| 1 | 15m² | Winter barley var LL09OH05 | 210 |
| 2 | 14.4m² | Winter barley var LL05OH05 | 205 |
| 3 | 14.4m² | Winter barley | 161 |

| **Trial** | **1** | **2** | **3** |
|---|---|---|---|
| Antraquinone @ 50 gai/100kg seed | 18.1 (a) | 5.6 (a) | 22.2 (a) |
| Antraquinone + Azoxystrobin+ Fludioxonil + Tebuconazole @ 50+2+5+3 gai/100kg seed | 0.2 (b) | 0 (d) | 0 (b) |

### Example 3:

**Tilletia caries - number of ears infected**

| **Trial** | **Plot size** | **Crop/variety** | **DAP** |
|---|---|---|---|
| 1 | 15m² | Winter wheat/ caphorn | 253 |
| 2 | 14.25m² | Winter wheat/ caphorn | 220 |
| 3 | 15m² | Winter wheat/ caphorn | 212 |
| 4 | 12m² | Winter wheat/ caphorn | 192 |

| **Trial** | **1** | **2** | **3** | **4** |
|---|---|---|---|---|
| Antraquinone @ 50 gai/100kg seed | 14.3 (a) | 232.3 (a) | 84.3 (a) | 56 (a) |
| Antraquinone + Azoxystrobin+ Fludioxonil + Tebuconazole @ 50+2+5+3 gai/100kg seed | 0 (c) | 0 (c) | 0 (c) | 0 (c) |

### Example 4:

**Helminthosporium gramineum - count of infected plants**

| **Trial** | **Plot size** | **Crop/variety** | **DAP** |
|---|---|---|---|
| 1 | 3m² | Winter barley/ Express | 232 |
| 2 | 15m² | Summer barley | 93 |
| 3 | 3m² | Winter barley/ Express | 194 |
| 4 | 30m² | Winter barley | 234 |
| 5 | 30m² | Winter barley / Narcis | 232 |

| **Trial** | **1** | **2** | **3** | **4** | **5** |
|---|---|---|---|---|---|
| Check | 26.25 (a) | 6 (a) | 52 (a) | 187 (a) | 22.3 (a) |
| Azoxystrobin + Fludioxonil + Tebuconazole @ 2 + 5 + 3 gai/100kg seed | 1.0 (cd) | 0 (b) | 0.5 (b) | 24 (cd) | 0 (c) |

### Example 5:

**Monographelia nivalis - greenhouse - % clean plants emerged**

| **Trial** | **Plot size** | **Crop/variety** | **DAP** |
|---|---|---|---|
| 1 | 0.03m² | winter wheat/ PP01 BD02 | 43 |
| 2 | 0.03m² | winter wheat/ PP01 BD02 | 35 |
| 3 | 0.05m² | winter wheat/ PP01 BD02 | 28 |

| **Trial** | **1** | **2** | **3** |
|---|---|---|---|
| Check | 23.3 (d) | 16.7 (fg) | 48.7 (b) |
| Azoxystrobin + Fludioxonil + Tebuconazole @ 2 + 5 + 3 gai/100kg seed | 64 (ac) | 73.3 (a) | 76 (a) |

### Example 6:

**Yield data (T/Ha)**

| **Trial** | **Plot size** | **Crop/variety** | **DAP** |
|---|---|---|---|
| 1 | 3m² | winter barley/ Narcis | 285 |
| 2 | 3m² | winter barley/ Express | 262 |
| 3 | 30m² | winter wheat/ Arina | 275 |

| **Trial** | **1** | **2** | **3** | **average** |
|---|---|---|---|---|
| Check | 9 (a | 9.5 (a) | 6.9 (a) | 8.4 |
| Azoxystrobin + Fludioxonil+ Tebuconazole cm 5+3+2 gai/100kg seed | 11 (b) | 10.4 (b) | 7.1 (a) | 9.5 |

## Claims

1. A method of controlling or preventing pathogenic damage or pest damage in a plant propagation material, a plant, parts of a plant and/or plant organs that grow at a later point in time, which comprises applying simultaneously on the plant, part of the plant, plant organs, plant propagation material or a surrounding thereof a combination comprising (I) tebuconazole, (II) azoxystrobin and (III) fludioxonil, and optionally (IV) one or more customary formulation auxiliaries.

2. A method of protecting a plant propagation material, a plant, parts of a plant and/or plant organs that grow at a later point in time against pathogenic damage or pest damage by applying simultaneously to the plant, parts of plant, plant organs, plant propagation material or a surrounding thereof a combination, as defined in claim 1.

3. A method of improving the growing characterictics of a plant, which comprises applying simultaneously to the plant, parts of plant, plant organs and/or plant propagation material, a combination, as defined in claim 1.

4. The method according to any one of claims 1 to 3 wherein the mass ratio of between any two active ingredients in the combination is from 100:1 to 1:100.

5. The method according to any one of claims 1 to 4, wherein the combination further comprises one or more additional fungicides.

6. The method according to any one of claims 1 to 5, wherein the combination further comprises one or more nematicides.

7. The method according to claim 1 wherein the plant propagation material is a seed.

8. A plant propagation material comprising the combination defined in any one of claims 1 to 6.

9. A pesticidal combination comprising (I) tebuconazole, (II) azoxystrobin and (III) fludioxonil, and optionally (IV) one or more customary formulation auxiliaries.

## Patentansprüche

1. Verfahren zum Bekämpfen oder Vorbeugen von Schäden durch Pathogene oder Schädlinge in einem pflanzlichen Vermehrungsmaterial, einer Pflanze, Pflanzenteile und/oder Pflanzenorganen, die später hinzuwachsen, bei dem man eine Kombination, die (I) Tebuconazol, (II) Azoxystrobin und (III) Fludioxonil und gegebenenfalls (IV) einen oder mehrere übliche Formulierungshilfsstoffe umfasst, gleichzeitig auf Pflanze, Pflanzenteil, Pflanzenorgane, pflanzliches Vermehrungsmaterial oder deren Umgebung appliziert.

2. Verfahren zum Schützen eines pflanzlichen Vermehrungsmaterials, einer Pflanze, Pflanzenteilen und/oder Pflanzenorganen, die später hinzuwachsen, gegen Schädigung durch Pathogene oder Schädlinge dadurch, dass man eine Kombination wie in Anspruch 1 definiert gleichzeitig auf die Pflanze, Pflanzenteile und/oder Pflanzenorgane, pflanzliches Vermehrungsmaterial oder deren Umgebung appliziert.

3. Verfahren zum Verbessern der Wachstumseigenschaften einer Pflanze, bei dem man eine Kombination wie in Anspruch 1 definiert gleichzeitig auf die Pflanze, Pflanzenteile, Pflanzenorgane und/oder pflanzliches Vermehrungsmaterial appliziert.

4. Verfahren nach einem der Ansprüche 1 bis 3, wobei das Gewichtsverhältnis zwischen zwei beliebigen Wirkstoffen in der Kombination 100:1 bis 1:100 beträgt.

5. Verfahren nach einem der Ansprüche 1 bis 4, wobei die Kombination weiterhin ein oder mehrere zusätzliche Fungizide umfasst.

6. Verfahren nach einem der Ansprüche 1 bis 5, wobei die Kombination weiterhin ein oder mehrere zusätzliche Nematizide umfasst

7. Verfahren nach Anspruch 1, wobei es sich bei dem pflanzlichen Vermehrungsmaterial um einen Samen handeln.

8. Pflanzliches Vermehrungsmaterial, das eine Kombination wie in einem der Ansprüche 1 bis 6 definiert umfasst.

9. Pestizide Kombination, die (I) Tebuconazol, (II) Azoxystrobin und (III) Fludioxonil und gegebenenfalls (IV) einen oder mehrere übliche Formulierungshilfsstoffe umfasst.

## Revendications

1. Méthode pour lutter contre ou empêcher l'endommagement par des pathogènes ou l'endommagement par des espèces nuisibles dans une matière de propagation de plante, une plante, des parties d'une plante et/ou des organes de plante qui poussent à un moment tardif, qui comprend l'application simultanée sur la plante, la partie de la plante, les organes de plante, la matière de propagation de plante ou un environnement de ceux-ci, d'une combinaison comprenant (I) le tébuconazole, (II) l'azoxystrobine et (III) le fludioxonil, et éventuellement (IV) un ou plusieurs auxiliaires de formulation usuels.

2. Méthode pour protéger une matière de propagation de plante, une plante, des parties d'une plante et/ou des organes de plante qui poussent à un moment tardif, contre l'endommagement par des pathogènes ou l'endommagement par des espèces nuisibles par l'application simultanée sur la plante, les parties de plante, les organes de plante, la matière de propagation de plante ou un environnement de ceux-ci d'une combinaison telle que définie dans la revendication 1.

3. Méthode pour améliorer des caractéristiques de croissance d'une plante, qui comprend l'application simultanée sur la plante, les parties de plante, les organes de plante et/ou la matière de propagation de plante, d'une combinaison telle que définie dans la revendication 1.

4. Méthode selon l'une quelconque des revendications 1 à 3, **caractérisée en ce que** le rapport en masse entre deux principes actifs quelconques dans la combinaison est de 100:1 à 1:100.

5. Méthode selon l'une quelconque des revendications 1 à 4, **caractérisée en ce que** la combinaison comprend en outre un ou plusieurs fongicides supplémentaires.

6. Méthode selon l'une quelconque des revendications 1 à 5, **caractérisée en ce que** la combinaison comprend en outre un ou plusieurs nématicides.

7. Méthode selon la revendication 1, **caractérisée en ce que** la matière de propagation de plante est une graine.

8. Matière de propagation de plante comprenant la combinaison définie dans l'une quelconque des revendications 1 à 6.

9. Combinaison pesticide comprenant (1) le tébuconazole, (II) l'azoxystrobine et (III) le fludioxonil, et éventuellement (IV) un ou plusieurs auxiliaires de formulation usuels.
